# EUROPEAN PATENT APPLICATION

(11) **EP 3 363 301 A1**
(43) Date of publication of application: **22.08.2018**
(21) Application number: 16854997.0
(22) Date of filing: 13.10.2016
(51) Int. Cl.: A23N 4/08, A23N 1/02, B26D 3/26, B26D 3/28, C11B 1/06

(54) **METHOD AND DEVICE FOR SEPARATING THE PULP FROM THE STONE OF THE FRUIT, IN SLICES**

(30) Priority: 13.10.2015 ES 201531467
(71) Applicant: Thune Eureka, S.A., 36618 Vilagarcia de Arousa Pontevedra (ES); Carranza González, Agustín, 23006 Jaen (ES); Carranza Tortosa, David, 41089 Dos Hermanas Sevilla (ES)
(72) Inventor: CARRANZA GONZÁLEZ, Agustín, 23006 Jaen (ES); CARRANZA TORTOSA, David, 41089 Dos Hermanas Sevilla (ES); GARCÍA RODRÍGUEZ, Manuel Jesús, 36618 Vilagarcia de Arousa Pontevedra (ES); CAMPOS FERRO, Miguel, 36618 Vilagarcia de Arousa Pontevedra (ES); BELLO PATIÑO, Carlos, 36618 Vilagarcia de Arousa Pontevedra (ES)
(74) Representative: Ungria López, Javier
(86) International application number: PCT/ES2016/070723
(87) International publication number: WO 2017/064348

(57) **Abstract**

The invention relates to a method for separating the pulp from the stone of the fruit, in slices, said method comprising the following phases: a) supplying fruit to an auger feed (2); b) transporting the fruit from the auger feed (2) to a chamber (3) comprising a drum (7) with openings and longitudinal blades (6); c) bringing the fruit against the drum (7), by means of the blades (6), in order to produce slices of the fruit; d) depositing the slices of the fruit, as they pass through the openings of the drum (7), into a collection hopper (9); e) maintaining the method from phase c) to then bring the fruit, now in the form of stones, via an opening of the drum (7), to a waste hopper (10). The device comprises a feeding hopper (1), an auger feed (2), a chamber (3) with blades and a drum with openings, a motor (5) and two collection hoppers (9, 10).

## Description

### OBJECT OF THE INVENTION

The present invention discloses a method for separating the pulp from the stones of soft-skinned drupe fruits, in other words, fleshy fruits with a woody stone, such as plums, cherries, or olives, among others, in slices or small strips.

It also describes the device used to carry out the aforementioned method for separately obtaining the pulp of the fruit and the stones.

This method is used to obtain, on one hand, totally clean fluids and sliced pulp of fruits for making juices, marmalades, or oil, such that it is not contaminated by pieces of the stone or the seed that is located inside the stone, and on the other, intact and clean stones, to be used for other purposes, mainly as biomass for combustion.

The invention may be applied especially in the area of industry focused on the processing of fruit harvests.

### TECHNICAL PROBLEM TO BE RESOLVED AND BACKGROUND OF THE INVENTION

In the drupe sector, the current state of the art methods related to the separation of the edible part of the fruit from the stone are known. These methods can be divided into two distinct groups.

The first includes a type of method aimed at extracting the stone from the fruit, for the purpose of marketing the pitted fruit. This makes it possible to market clean fruit, which may also have the skin removed, if deemed convenient.

The second includes another type of method that is not aimed at obtaining the pitted fruit as cleanly as possible, but rather to obtain the pulp and fluids of the fruit to later be used to produce juices, oil, marmalade, and similar products. In this case, the objective is not to obtain the intact pulp, but rather to obtain all of the possible pulp, without the stone, in an economic manner. A second process has also been added to this second type of method, consisting of obtaining the stones from the fruits, for marketing as biomass or pellets for combustion processes.

The present invention has a field of application with many development possibilities in the sector related to olives and the extraction of olive oil, due to the fact that oil extraction is currently done with the presence of much of the wood belonging to the stones and their seeds, with the consequent organoleptic drawbacks. In fact, there is no known solution in the state of the art for the preparation of oil that quickly, economically, and efficiently allows the separation of the pulp from the stones of fruits in such a way that the stone remains intact and clean.

The document ES-2431265_A1 describes a device for removing the flesh from olives and that makes it possible to obtain higher quality olive oil, breaking the olive pulp but not the stone and without separating the pulp from the stone. It comprises a chamber defined by a housing that incorporates a rotating shaft. The housing incorporates fixed radial bodies. The shaft incorporates moving bodies that extend radially. The fixed and moving bodies alternate and are spaced apart from one another by a distance such that it allows the stone and the pulp to pass, but not the olive, in order to break up the pulp without breaking the stone.

The objective sought in this document is to obtain oil, with the olive stone being a waste product, despite the fact that the usable percentage of the olive is not very high and the quantity of olive waste that accompanies the stone is very large.

The document ES-1030856_U describes a device that separates the pulp stuck to the olive stones after the stones have been extracted. The device incorporates a cylindrical tank that incorporates a shaft with radial blades that define a volume bounded by a mesh with openings. When the shaft turns, the blades push the stones towards the drum, and when the stones strike the drum, the part of the pulp that is adhered to the stone falls off progressively, cleaning the stone of impurities. The stone, either whole or broken, and a part of the pulp, finally exits through the end of the cylindrical tank.

In this document, the method begins with olive stones with waste that is to be cleaned. The separations of the blades and the size of the openings in the mesh are selected based on the size of the stone and not the whole olive. In fact, since pomace presses are one of the sources of the olives, broken stones are often processed, which, due to their smaller size, pass through the openings in the mesh, contaminating the oil that is obtained and negatively affecting its flavor.

The present invention describes a method that combines the two inventions described above, presenting a production method with a double objective:
1) To obtain slices of pulp along with fluids of excellent quality, as they are not contaminated by traces of stones or seeds, avoiding the drawbacks present in the aforementioned documents and improving both the obtaining of the pulp and fluids as well as the obtaining of whole, clean stones, obtaining products with optimum quality, and
2) To clean pulp from the stones of the fruits for later use.

### DESCRIPTION OF THE INVENTION

The present invention discloses a method to separate the pulp from the stone of the fruit in slices and the device used to carry out the aforementioned method.

The method is made up of the following stages:
a) Supplying of fruit to an auger feed via a feeding hopper;
b) Activating a motor to transport the fruit from the auger feed to a chamber that comprises a drum with openings and blades affixed longitudinally along a shaft that is coaxial to both the drum and the auger feed, and that connects the auger feed to the motor;
c) Bringing the fruit by means of the blades against the drum to produce slices of the fruit by scraping against the edges of the openings in the drum;
d) If the slices do not pass through the openings in the drum, the they continue to be brought against the drum, along with the fruit, to slice them again;
e) If the slices pass through the openings in the drum, they are deposited into a collection hopper;
f) Maintaining the method from phase c) until the fruit, now in the form of stones, is carried through an opening in the drum to a waste hopper.

One of the most significant variables of the method of the invention is the intake flow of fruit to the chamber by means of the auger feed. This intake flow is regulated by the speed of rotation of the auger feed and by an opening in the side cover of the chamber that acts as the entrance to the chamber for the fruit. The auger feed speed is activated by a motor whose speed is regulated with a variable speed drive to which it is connected.

Another one of the principal characteristics of the present invention is that the method is carried out without the addition of external heat or other fluids, mainly water. This is vitally important because the method seeks to obtain a product of the highest quality that cannot be contaminated by external agents that affect its natural properties.

The device of the invention comprises a feeding hopper to introduce the fruit, an auger feed that collects the fruit by gravity that is introduced by the feeding hopper, and a chamber.

The chamber comprises a shaft connected at one end to at least one blade that is affixed to the shaft by at least one anchor arm and a drum that surrounds the blades and is coaxial to the shaft.

The device also comprises a motor connected to the other end of the shaft, a collection hopper for the fluids and pulp from the fruit, a waste hopper that collects the stones, and a protective housing secured to the drum.

The housing surrounds the chamber and comprises a side wall, in the shape of a funnel, that directs the fluids and slices of the fruit to the collection hopper, a top cover to access the chamber, a first side cover with a fitted opening through which the auger feed enters, and a second side covers with an opening to connect the shaft to the motor.

The configuration of the blades is a fundamental characteristic of the device. In the first place, the blades are longitudinal and are rotated with respect to the shaft, and they may have a linear or spiral geometry. They also maintain a constant clearance from the drum that is smaller than the size of the stones of the fruits that are to be processed. The blades also have a cross-section that is such that the surface that carries the fruit forms an angle of less than 90° with the surface of the drum, so that it always pushes them.

Another fundamental component of the invention is the drum, with a cylindrical, revolving, and coaxial configuration with respect to the shaft that moves the blades. The surface of the drum comprises openings that are oblong in the direction of the shaft that have a sharp edge on the inside to facilitate the creation of slices of the fruit when it scrapes against them. It is open at the ends and the surface may incorporate a lengthwise opening with a particular width that connects to one of the ends.

### BRIEF DESCRIPTION OF THE FIGURES

As a complement to the description being made, and for the purpose of helping to make the characteristics of the invention more readily understandable, according to a preferred embodiment of the invention, this specification is accompanied by a set of drawings which, by way of illustration and not limitation, represent the following:

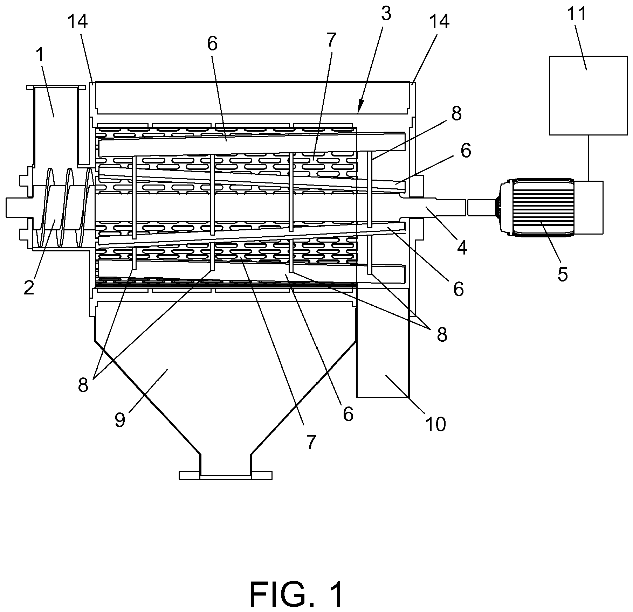

- Figure 1 shows a side view of the device of the invention with the chamber open and a longitudinal cross-section of the drum.
- Figure 2 shows a cross-section view of the device shown in figure 1 with a close-up view of the connection of the arm to a blade in a first embodiment.
- Figure 3 shows a cross-section view of the device shown in figure 1 with a close-up view of the connection of the arm to a blade in a second embodiment.
- Figure 4 shows a perspective view of the shaft of the device with the blades and the auger feed with an exploded view of the part that corresponds to the closure.
- Figure 5 shows a perspective view of the drum of the device in a first embodiment.
- Figure 6 shows a perspective view of the drum of the device in a second embodiment.
- Figure 7 shows a perspective view of the drum of the device in a third embodiment.

A list of the references used in the figures is provided below:
1. Feeding hopper.
2. Auger feed.
3. Chamber.
4. Shaft.
5. Motor.
6. Blades.
7. Drum.
8. Anchoring arms.
9. Collection hopper.
10. Waste hopper.
11. Variable speed drive.
12. Side wall of the housing.
13. Top cover of the housing.
14. Side covers of the ends.

### DESCRIPTION OF A PREFERRED EMBODIMENT OF THE INVENTION

The present invention discloses a method for separating the pulp from the stones of soft-skinned drupe fruits, in other words, fleshy fruits with a woody stone, such as plums, cherries, or olives, among others, in slices or small strips, obtaining, separately, the sliced pulp along with fluids from the fruit with no traces of stones, and the stones cleaned of pulp. The invention also describes the device for bringing out said method.

The method of the invention comprises the phases that are described below.

The method of the invention begins with whole fruit, free of leaves and dirt, with ripeness not affecting the process.

The fruits are supplied in bulk by a feeding hopper (1) and fall onto an auger feed (2) positioned under the feeding hopper (1).

The movement of the auger feed (2), activated by a motor (5), causes the fruit to be transported to a chamber (3). The flow is limited by the intake diameter of the auger feed (2) to the chamber (3).

In the chamber (3), the fruit is carried by blades (6) to cause it to scrape against a drum (7) with openings.

The scraping of the fruit against the openings of the drum (7) causes the fruit to be sliced, and if the slices have the adequate size, they will pass through the drum (7) through the openings to fall into a collection hopper (9) along with the fluids extracted during the movement of the fruit through the chamber (3).

If the slices do not pass through the drum (7), they will continue to circulate through the chamber (3) so that the slices themselves will be sliced again into smaller slices until they have an adequate size to pass through the openings in the drum (7).

Along with the larger slices, the fruit continues to be pulled by the blades (6), which also pull the fruit in the direction of the shaft (4) of the chamber (3), to prevent the fruit from clumping inside the chamber (3) and the extraction proceeds naturally.

When the fruit reaches the end of the drum (7), all of the pulp has been extracted and the fruit is now in the form of clean stones, which continue to be carried by the blades (6) and exit through the end of the drum (7) and fall into a waste hopper (10).

It is important to note that the method is carried out at a controlled speed of rotation, and not faster than 750 rpm, to avoid breaking the stones. The adequate value is normally lower, depending on the ripeness of the fruit.

The described method is carried out by means of a device as described below.

As shown in the figures, the device comprises a chamber (3), which comprises a shaft (4), blades (6) connected to the shaft (4) by means of anchoring arms (8), a drum (7), with a cylindrical configuration with openings that covers the blades (6), and a housing that is secured externally to the drum (7) and closes the chamber (3) with side covers (14) at the ends.

The shaft (4) of the device extends towards the outside of the chamber (3) at both ends. At one of the ends, the shaft (4) is extended by means of an auger feed (2). A feeding hopper (1) is positioned above the auger feed (2), which introduces the fruit to be processed, which falls by gravity onto the auger feed (2). The auger feed (2) is activated by a motor (5) that carries the fruit to the chamber (3). The chamber (3) comprises, at this end, a side cover (14) with an opening with a diameter similar to the outer diameter of the screw of the auger feed (2). Consequently, the intake flow of the fruit from the auger feed (2) to the chamber (3) is regulated, on one hand by the dimensions of the auger feed, which are configured by the outer diameter and by the angle of the screw, and on the other, by the speed of rotation of the auger feed (2), which is controlled by a motor (5) that is connected to the other end of the shaft (4) of the device. This end of the chamber (3) is closed off by means of another side cover (14) that has an opening through which the shaft (4) is connected to the motor (5).

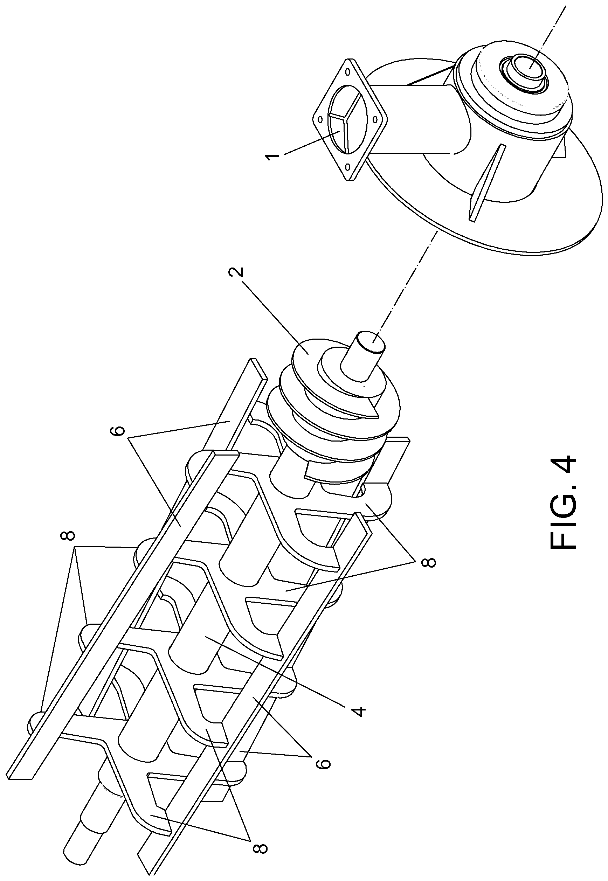

Figure 4 shows the feeding hopper (1) connected to the housing that encloses the auger feed (2) in an exploded view separated from the shaft (4) of the device, which incorporates the anchoring auger feed (2) and the blades (6) connected to the shaft (4) by means of anchoring arms (8).

The preferred embodiments shows a device with four blades (6), due to the efficiency of the process, although the device may include any number of blades (6), as well as anchoring arms (8).

Consequently, as described, when the motor (5) is activated, the auger feed (2) goes into operation and, loaded with fruit, supplies them to the inside of the chamber (3), with the limitation of the size of the opening of the side cover (14) of the housing, as mentioned before. The blades (6) also go into operation when the motor (5) is activated, pushing the fruit that is inside the chamber (3) and forcing it to roll forward through the chamber (3) against the drum (7).

The blades (6) are configured based on two aspects. On one hand, they are configured to push the fruit so that it is carried through the chamber (3) against the drum (7), so that the pulp is sliced by the continuous scraping against the openings. To do this, the outer diameter of the clearance between the blades (6) and the drum (7) must always be less than the size of the stone of the fruit to be processed and will preferably be constant. The slices of fruit will pass through the openings in the drum (7) if they are of adequate size or are in the required position. If they do not pass through the openings of the drum (7), they will continue advancing through the chamber (6) and will be sliced again until they are small enough to exit the chamber (3) through the openings in the drum (7).

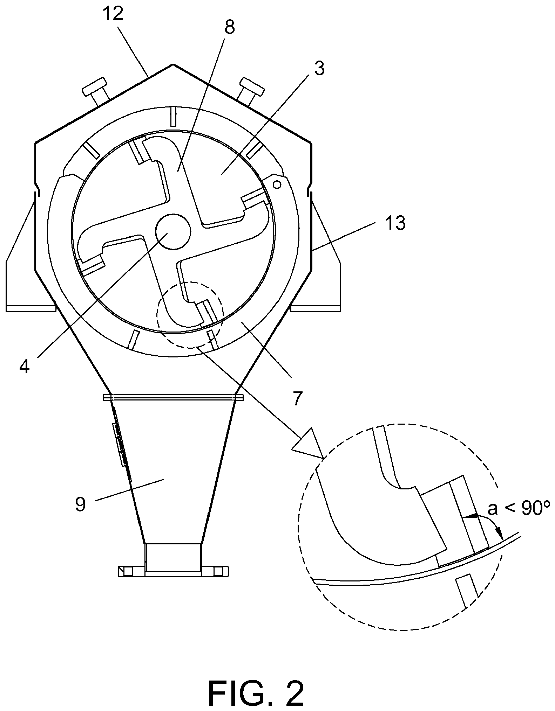

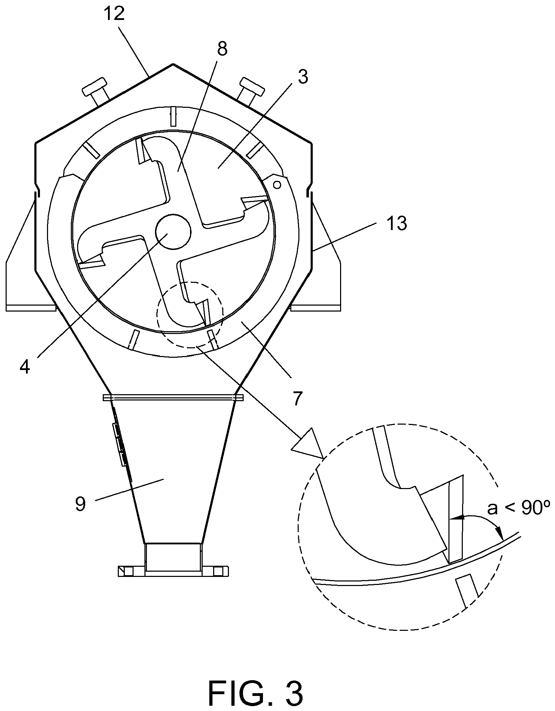

To achieve optimum movement of the fruit through the chamber (6), on one hand, the blades are angled transversally with respect to the drum (7). This angle is less than 90°, so that the fruit is trapped by the blades (6) during their movement. This configuration is shown in figures 2 and 3, which show, respectively, two types of blades (6), which differ in that one has a prism cross-section and the other a wedge cross-section. As shown in these figures, it can clearly be understood that if this angle that the blades (6) form with the surface of the drum (7) were greater than 90°, the fruit could progress along the outer surface of the blades (6), without being brought against the drum (7).

In addition, the blades (6) have a longitudinal configuration, and they are connected to the shaft (4) by means of a series of anchoring arms (8), as shown in figure 4. The blades (6) are rotated longitudinally with respect to the shaft (4). The angle of the blades (6) with respect to the direction of the shaft (4) must be correct with respect to the direction of rotation of the motor (5), such that it is in the direction opposite the direction of rotation of the shaft (4). This configuration is aimed at bringing the fruit along the drum (7) in the longitudinal direction, so that after all of the pulp has been sliced, the stones are removed from the final end of the drum (7).

The length of the drum (7) is less than the length of the blades (6), and therefore less than the length of the chamber (3), leaving an open zone in the chamber (3) through which the clean stones fall into the waste hopper (10).

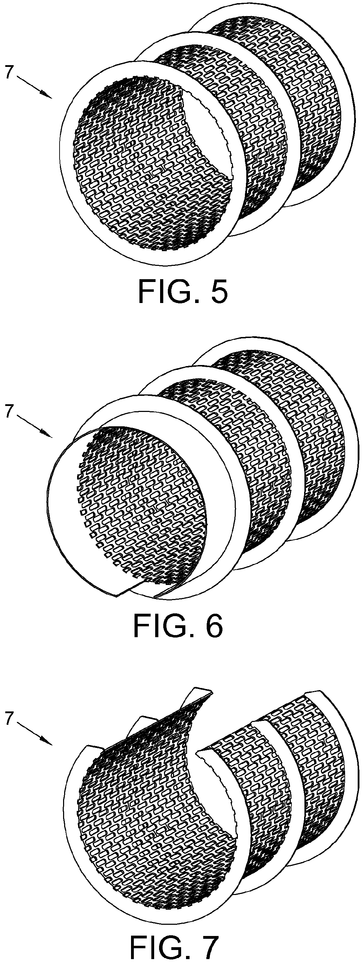

In a second embodiment, as shown in figure 6, the length of the drum (7) is similar to the length of the blades (6) and the chamber (3). In this case, the drum (7) is configured with an opening in the bottom of one of the ends, through which the clean stones fall into the waste hopper (10). The wall of the drum (7) along the entire length of this opening may have openings or may be smooth, as is deemed better due to simplicity of manufacture, since the fruit will not come into contact with this part of the wall. Therefore, over the course of the preparation of this invention, when talking about the end of the drum (7) through which the cleaned fruit falls, it is considered to be understood that if the drum has the form as indicated in this second embodiment, the end refers to the zone in which the aforementioned opening is located.

The two aforementioned two embodiments, the drum (7) has a series of external reinforcements to maintain the internal revolution geometry.

An additional embodiment of the drum (7) is shown in figure 7, compatible with the previous two, with a longitudinal opening that is closed by means of a hinged enclosure that does not alter the geometry of the drum (7). This closure is not shown in the figures. The opening is located in the top zone, and during operation, the closure is firmly secured to prevent it from opening. It does not affect the functioning of the slicing process, since, due to gravity, the process of slicing the fruit against the upper section of the drum (7) will be very slight or even null, occurring mainly in the lower parts of the drum (7). The function of the closure is to allow the device to be opened to clean the chamber (3) when necessary.

It must also be taken into account that in order to maintain a constant clearance between the blades (6) and the drum (7), the exterior configuration of the blades (6), as they are rotated with respect to the axis of the drum (7), cannot be linear, in the form of a prism, but rather the longitudinal cross-section of the blade (6) must be an ellipse. However, the internal shape of the blades (6) does not matter since the clearance between the blades (6) with the shaft (4) does not matter, and they could even be connected with no gap between the blade (6) and the shaft (4).

Consequently, the movement of the blades (6) carries the fruit against the drum (7) in the radial direction and also moves them in the direction of the shaft (4) until they are discharged from the opposite end.

It is important to emphasize the importance of the control of the intake flow of the fruit into the chamber (3). Indeed, the blades (6) must carry a quantity of fruit that must not exceed a particular volume, above which the process would begin to lose efficiency. Excessive volume would mean that not all of the fruit would have the necessary contact with the drum (7) to slice it and to be able to reach the end of the chamber (3) as a stone free of pulp.

For an optimum effect in the slicing process of the fruit, the openings of the drum (7) have an oblong configuration in the direction of the shaft (4), as shown in figure 5. The edges of the openings are rounded on the outside of the drum (7) and the edges on the inside, which face the chamber (3) and come into contact with the fruit, have an edge, to facilitate the slicing of the fruit when it comes into contact with them.

The chamber (3) is covered by a housing that connects the two side covers (14) at the ends. The housing is made up of 2 parts: a top cover (13), that can be opened to access the drum (7), and a side wall (12), in the shape of a funnel, to collect the slices or slice pieces and send them by gravity to the lower zone where the hoppers (9, 10) are located for the extraction of the final products, the pulp and fluids (9) on one hand, and the clean, whole stones (10) on the other.

The length of the collection hopper (9) is similar to the length of the wall of the drum (7) in the lower zone and its purpose is to collect, by gravity, the pulp and fluids that pass through the openings in the drum (7). The second hopper (10) is positioned after the first one to collect the stones that exit the drum (7) through its final end or through the lower opening.

Consequently, the device functions as described below.

The fruit introduced in bulk though the feeding hopper (1) falls on the auger feed (2), which introduces it progressively into the chamber (3). The intake flow of fruit in the chamber (3) is limited by the outer diameter of the auger feed (2) and is regulated by the speed of rotation of the motor (5). Once the fruit has entered the chamber (3), the blades (6) push the fruit radially against the drum (7), such that it scrapes continuously against the edges of the openings of the drum (7) and it is sliced, progressively removing the pulp, which passes through the openings in the drum (7) and falls into the collection hopper (9). The configuration of the blades (6), angled in the opposite direction to the rotation of the shaft (4), causes the fruit, while at the same time moving radially through the chamber (3), being sliced by the edges of the openings in the drum (7) along the entire length of the drum, moves longitudinally in the direction of the shaft (4) as the blades (6) rotate. At the end of the drum (7), the fruit has lost all of the pulp, and the stones, which are completely clean, continue to be pushed by the blades (6) and fall out the end of the drum (7) by gravity though the opening that connects to the waste hopper (10).

Depending on the hardness of the skin or the pulp of the fruit that is to be sliced, due to the type of fruit or its degree of ripeness, the speed of the motor (5) is regulated by a variable speed drive (11) to which it is connected, so that the speed that must be applied to the auger feed (2) and the blades (6) can be selected.

In the specific application of olive oil, the process of obtaining oil without mixing with the wood of the stone and its seed allows better use of the fatty fraction of the processed olives, since the amount of oil discarded with the stone is smaller. Although this is the most developed application of the present invention, it can also be applied to other fruit for obtaining juices, marmalades, or similar products, because it makes it possible to extract the fluids and pulp completely, without subjecting the product to a preliminary cooking process. This means that the stone is not subjected to high temperatures and does not transfer its aromas to the end product, with is one of the principal causes of contamination of flavors. Likewise, since there is no cooking water, products with interesting organoleptic properties are not eliminated.

The technique also represents a less aggressive method of preparing the pulp, because of the lower speeds reached in the processing of the mass. In the case of olives, it eliminates the emulsion of the fats, without negatively affecting the speed at which the olives are processed.

Also, since the process takes place with minimal exposure to the atmosphere, the oxidation of the components with interesting organoleptic properties is considerably reduced.

This process enables better recovery of the product that are obtained, since the available technologies and means for processing pure, selected, or sorted products is always more efficient than the processing of mixtures. Therefore, in the marketing of olive oil or, in general, juices and marmalades from other fruits, the extraction without the presence of wood from the stones and their seeds generates organoleptic advantages with respect to the conventional process, which modifies the chemical composition of the obtained product by mixing it with the stone and the seed, adding contaminating aromas that lower its quality. On the other hand, the marketing of the stones, as a sub-product or as biomass for combustion, the wood of the stone, along with its seed, from a whole olive, has much better recovery than those mixed with pomace and also better than those from broken olives.

In addition, the process that is described offers the clear advantage and differentiation that it slices and cuts the flesh or pulp of drupes or fruit, generating a homogeneous mass with a single device and at the same time, separating it from the wood of the stone with its seed. No water or heat are added during the process, which in the specific case of olive oil prevents the deterioration of the organoleptic properties that are affected in existing extraction processes due to contamination caused by the wood of the stone and its seed. Lastly, it should be noted that the process is carried out at ambient temperature, with no external addition of heat, which likewise results in the obtaining of a distinctive product of superior quality.

It is important to note that the invention must not be limited to the embodiment described here. Other configurations may be applied by experts in the subject in light of the present description. Consequently, the scope of the invention is defined by the following claims.

## Claims

1. A method for separating the pulp from the stone of the fruit in slices, **characterized in that** it comprises the following phases:
a) Supplying of fruit on an auger feed (2) via a feeding hopper (1);
b) Activating a motor (5) to transport the fruit from the auger feed (2) to a chamber (3) that comprises a drum (7) with openings and blades (6) affixed longitudinally along a shaft (4) that is coaxial to both the drum (7) and the auger feed (2), and that connects the auger feed (2) to the motor (5);
c) Bringing the fruit by means of the blades (6) against the drum (7) to produce slices of the fruit by scraping against the edges of the openings in the drum (7);
d) If the slices do not pass through the openings in the drum (7), the they continue to be brought against the drum (7), along with the fruit, to slice them again;
e) If the slices pass through the openings in the drum (7), they are deposited into a collection hopper (9);
f) Maintaining the method from phase c) until the fruit, now in the form of stones, is carried through an opening in the drum (7) to a waste hopper (10).

2. The method for separating the pulp of fruit from the stone in slices, according to claim 1, **characterized in that** the flow of fruit from the auger feed (2) to the chamber (3) is regulated by means of an opening made in a side cover (14) of the chamber (3).

3. The method for separating the pulp of fruit from the stone in slices, according to claims 1 or 2, **characterized in that** the flow of fruit from the auger feed (2) to the chamber (3) is regulated by means of a variable speed drive (11) connected to the motor (5).

4. The method for separating the pulp from the stone of the fruit in slices, according to any of the claims 1 to 3, **characterized in that** there is no external addition of water.

5. The method for separating the pulp from the stone of the fruit in slices, according to any of the claims 1 to 3, **characterized in that** there is no external addition of heat.

6. A device for separating the pulp from the stone of the fruit in slices, by means of the method described in the previous claims, **characterized in that** it comprises:
- a feeding hopper (1) for the introduction of fruit,
- an auger feed (2) onto which the fruit introduced through the feeding hopper (1) falls, by gravity,
- a chamber (3) that comprises:
- A shaft (4) connected to the auger feed (2) at one of its ends,
- at least one blade (6),
- at least one anchor arm (8) attaching the blades (6) to the shaft (4),
- and a drum (7) coaxial to the shaft (4) that surrounds the blades (6),
- a motor (5) connected to the shaft (4) at the other end,
- a collection hopper (9) that collects the fluids and pulp from the fruit,
- a waste hopper (10) that collects the stones, and
- a protective housing secured to the drum (7) and surrounding the chamber (3), which comprises:
- a side wall (12), in the shape of a funnel, that directs the fluids and the slices of fruit to the collection hopper (10),
- a top cover (13), for access to the chamber,
- a first side cover (14) with a fitted opening through which the auger feed (2) enters,
- and a second side cover (14) with an opening for the connection of the shaft (4) to the motor (5),
where the blades (6) have a longitudinal configuration and are rotated with respect to the shaft (4) that maintains a constant clearance with the drum (7).

7. The device for separating the pulp from the stone of fruit in slices, according to claim 6, **characterized in that** the blades (6) have a cross-section such that the surface that carries the fruit forms an angle of less than 90° with the surface of the drum (7).

8. The device for separating the pulp from the stone of the fruit in slices, according to any of the claims 6 or 7, **characterized in that** the blades have a longitudinal configuration in a spiral arrangement along the shaft (4).

9. The device for separating the pulp from the stone of the fruit in slices, according to any of the claims 6 to 8, **characterized in that** the drum (7) is open at the ends.

10. The device for separating the pulp from the stone of the fruit in slices, according to claim 9, **characterized in that** one of the openings is partially extended by the cylindrical wall of the drum (7) to form a longitudinal slot with a specific width.

11. The device for separating the pulp from the stone of the fruit in slices, according to any of the claims 9 to 10, **characterized in that** the surface of the drum (7) comprises oblong openings in the direction of the shaft (4).

12. The device for separating the pulp from the stone of the fruit in slices, according to claim 11, **characterized in that** one of the openings of the drum (7) have sharp edges on the inside zone.

13. The device for separating the pulp from the stone of the fruit in slices, according to any of the claims 6 to 12, **characterized in that** the speed of the motor (5) is regulated by a variable speed drive (11).
